# FASCICULE DE BREVET EUROPEEN

(11) **EP 1 011 401 B1**
(45) Date de publication et mention de la délivrance du brevet: **03.07.2002**
(21) Numéro de dépôt: 98917271.3
(22) Date de dépôt: 27.03.1998
(51) Int. Cl.: A47J 42/56

(54) **APPAREIL ELECTROMENAGER POUR LA PREPARATION D'ALIMENTS COMPORTANT UN DISPOSITIF DE SECURITE**
HAUSHALTGERÄT ZUM BEREITEN VON NAHRUNGSMITTELN MIT EINER SICHERHEITSVORRICHTUNG
ELECTRICAL HOUSEHOLD APPLIANCE FOR PREPARING FOOD COMPRISING A SAFETY DEVICE

(30) Priorité: 28.03.1997 FR 9703813
(43) Date de publication de la demande: 28.06.2000
(73) Titulaire: MOULINEX S.A., 14123 Cormelles Le Royal (FR)
(72) Inventeur: BRISARD, Pierre, F-50890 Condé sur Vire (FR)
(74) Mandataire: Busquets, Jean-Pierre
(86) Numéro de dépôt international: FR9800644
(87) Numéro de publication internationale: WO9843522

(56) Documents cités:
- WO-A-96/22720
- DE-B- 1 165 215
- GB-A- 2 018 930
- US-A- 4 373 677

## Description

La présente invention concerne un appareil électroménager pour la préparation d'aliments, tel que par exemple un hachoir, comportant un boîtier renfermant un groupe-moteur électrique dont l'arbre de sortie fait saillie du boîtier et est destiné à entraîner en rotation un outil de travail logé dans un bol sur lequel est fixé un couvercle amovible comprenant une languette fixée sur la périphérie du couvercle ; et un dispositif de sécurité comprenant un interrupteur agencé dans le circuit d'alimentation électrique du moteur, un poussoir de commande de l'interrupteur monté coulissant verticalement à l'intérieur et à la périphérie du boîtier, associé à un ressort de rappel, et actionné par un organe de commande manuelle lié fixement au poussoir et monté mobile sur le boîtier entre une position arrêt et une position marche, des moyens permettant, d'une part, de verrouiller l'organe de commande manuelle en position arrêt lorsque le couvercle n'est pas correctement fixé sur le bol de sorte que le poussoir reste dans une position haute dans laquelle il n'actionne pas l'interrupteur, et d'autre part, de déverrouiller cet organe de commande manuelle en position arrêt lorsque le couvercle est correctement fixé sur le bol de manière que, par manoeuvre de l'organe de commande vers sa position marche, le poussoir vienne occuper par coulissement une position basse dans laquelle il commande la fermeture de l'interrupteur pour autoriser l'alimentation du moteur, ainsi que des moyens de retenue coopérant avec la languette du couvercle pour empêcher l'ouverture de ce dernier lorsque le poussoir est déplacé vers sa position basse.

Un tel dispositif est notamment décrit dans WO-A-96/22720.

Dans un appareil électroménager à commande manuelle connu de ce genre, le dispositif de sécurité autorise la mise en marche de l'appareil par actionnement de l'organe de commande manuelle vers sa position marche seulement lorsque le couvercle est correctement fixé sur le bol, tout en empêchant au cours du fonctionnement de l'appareil l'ouverture du couvercle grâce aux moyens de retenue coopérant avec la languette du couvercle, permettant ainsi de protéger l'utilisateur de tout risque de blessure qui serait dû à l'outil de travail en mouvement, constitué généralement par un outil tranchant considéré comme dangereux, si l'appareil était mis en marche lorsque le couvercle n'est pas correctement fixé sur le bol ou si le couvercle était enlevé au cours du fonctionnement de l'appareil. En fin de préparation des aliments, le poussoir remonte en position haute sous la détente de son ressort de rappel de sorte que l'interrupteur passe dans son état d'ouverture pour couper l'alimentation électrique du moteur, et l'organe de commande manuelle qui est lié fixement au poussoir est alors ramené en position arrêt dans laquelle le couvercle peut dès lors être ouvert et retiré.

Bien qu'un tel appareil électroménager offre une sécurité efficace à l'utilisateur, il subsiste toutefois encore un risque de blessure pour l'utilisateur dans le cas où l'interrupteur est bloqué dans son état de fermeture par suite, par exemple, d'un collage des contacts fixe et mobile de l'interrupteur, ou encore d'un défaut de fabrication de l'interrupteur. En effet, dans ce cas, le poussoir remonte sous l'action de son ressort de rappel, entraînant avec lui l'organe de commande manuelle vers sa position arrêt, et le couvercle peut donc être ouvert et retiré ; le moteur étant toujours sous tension, l'outil de travail continue à tourner dans le bol sans le couvercle, ce qui offre un danger certain à l'utilisateur si ce dernier introduit par mégarde sa main dans le bol ouvert.

L'invention a notamment pour but de supprimer ce risque et de réaliser un appareil électroménager, du type exposé ci-dessus, dans lequel le dispositif de sécurité offre une sécurité absolue à l'utilisateur.

Selon l'invention, le dispositif de sécurité comprend en outre des moyens permettant de maintenir le poussoir en position basse lorsque l'interrupteur est bloqué dans son état de fermeture.

Ainsi, on comprend qu'en empêchant le poussoir de remonter en position haute dans le cas où l'interrupteur est bloqué à l'état fermé, l'organe de commande manuelle ne peut désormais pas être ramené vers sa position arrêt, et il est donc impossible de retirer le couvercle du bol. L'utilisateur devra alors débrancher l'appareil pour arrêter le moteur avant de procéder à un éventuel démontage de l'appareil.

Pour un interrupteur du type comprenant un corps dans lequel est monté coulissant un poussoir vertical de contact qui présente deux extrémités libres, respectivement supérieure et inférieure, faisant saillie du corps, et qui porte, à proximité de son extrémité inférieure, une bague métallique faisant office de contact mobile destiné à venir coopérer avec deux contacts fixes montés sur ledit corps, et selon une forme de réalisation préférée de l'invention, le poussoir est en appui permanent sur l'extrémité supérieure du poussoir de contact, et les moyens de maintien du poussoir en position basse sont constitués par une première patte montée fixe sur le poussoir et qui est en appui permanent sur l'extrémité inférieure du poussoir de contact.

De préférence, le poussoir et la première patte sont réalisés d'une seule pièce en matière plastique.

Ainsi, cette patte d'appui permanent faisant partie intégrante du poussoir constitue un organe simple, économique, facile à réaliser, fiable, et parfaitement adapté à une fabrication en grande série.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'un appareil électroménager selon l'invention, montrant le couvercle correctement fixé sur le bol et avant mise en marche de l'appareil ; et
- la figure 2 est une vue analogue à la figure 1, l'appareil étant en fonctionnement et l'interrupteur étant bloqué à l'état fermé.

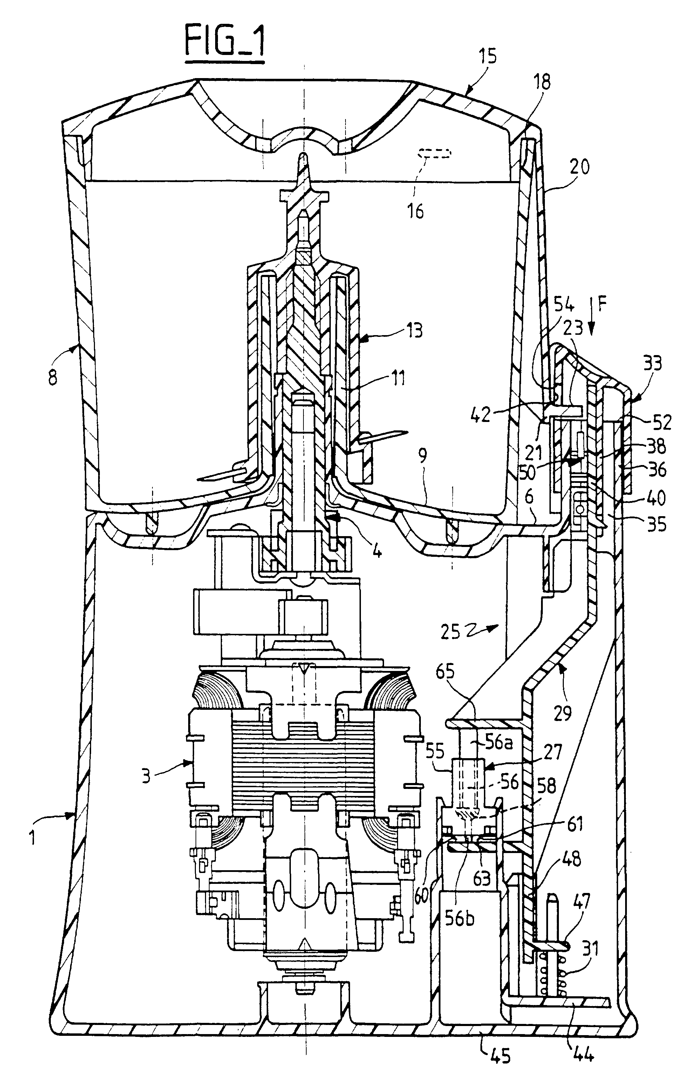

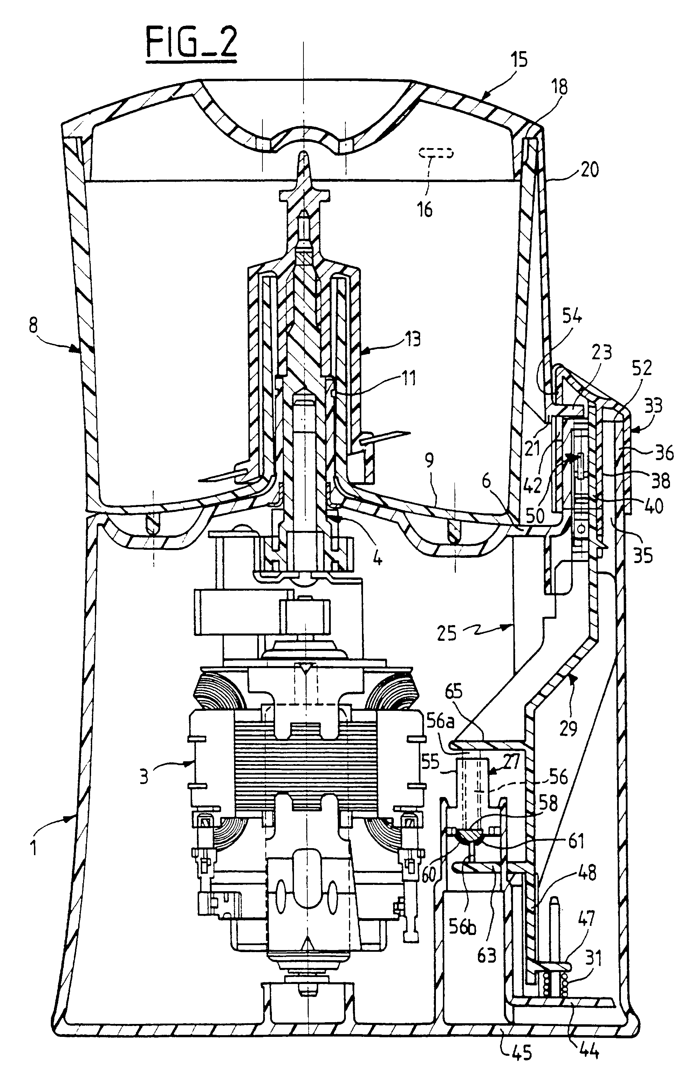

L'appareil électroménager illustré aux figures 1 et 2 est un hachoir électrique comprenant un boîtier formant socle 1, renfermant un groupe-moteur électrique 3 dont l'arbre de sortie 4 fait verticalement saillie de la face supérieure 6 du boîtier 1. Ce boîtier 1 est surmonté par un bol amovible 8 destiné à contenir les aliments à hacher et présente sur sa paroi de fond 9 une cheminée verticale 11 dans laquelle vient s'engager l'arbre de sortie 4 du moteur 3. Le bol 8 loge un outil de travail rotatif 13, tel qu'un couteau, qui est enfilé sur la cheminée 11 et qui est accouplé en rotation avec l'arbre de sortie 4 du moteur 3.

Le bol 8 est fermé par un couvercle amovible 15 au moyen d'un système de fixation du type à baïonnette, dont l'un des éléments est désigné en 16 sur les figures 1 et 2.

Le bord supérieur 18 du couvercle 15 porte une large patte 20 dirigée vers le bas et vers l'extérieur par rapport au bol 8 et qui porte elle-même, à proximité de son extrémité inférieure libre 21, une languette 23 perpendiculaire à cette patte et dirigée vers l'extérieur. Après fixation du couvercle 15 sur le bol 8 par rotation du couvercle, la languette 23 se trouve à une certaine hauteur au-dessus de la face supérieure 6 du boîtier 1.

Le boîtier 1 renferme également un dispositif de sécurité, désigné par la référence générale 25 sur les figures 1 et 2, qui comprend un interrupteur 27, dont la structure détaillée sera explicitée plus loin, agencé d'une manière connue en soi dans le circuit d'alimentation électrique du moteur 3, et un poussoir 29 de commande de l'interrupteur qui est monté coulissant verticalement à la périphérie du boîtier 1 en étant associé à un ressort de rappel 31, et qui est actionné par un organe de commande manuelle 33 lié fixement au poussoir 29 et monté mobile sur le boîtier 1 entre une position arrêt (figure 1) et une position marche (figure 2).

Dans l'exemple de réalisation représenté sur les figures 1 et 2, le poussoir 29 est espacé latéralement de l'interrupteur 27 et est logé dans un renflement vertical 35 intégré et saillant à la périphérie du boîtier 1, et dont la partie supérieure 36 s'élève à une certaine hauteur par rapport à la face supérieure 6 du boîtier 1.

Dans cet exemple de réalisation, l'organe de commande manuelle 33 est un bouton-poussoir monté verticalement sur la partie supérieure 36 du renflement 35 du boîtier 1, dans le prolongement vertical du poussoir 29, et qui porte intérieurement une patte verticale descendante 38 montée fixement sur la partie supérieure verticale 40 du poussoir 29 par tout moyen de fixation approprié.

En regard de la figure 1, le bouton-poussoir 33 comporte, sur sa face dirigée vers le bol 8, une fente 42 s'ouvrant sur l'un des côtés latéraux du bouton-poussoir 33 et s'étendant dans ce dernier selon une direction parallèle à la face supérieure 6 du boîtier 1 en étant située à une même hauteur de la face supérieure 6 du boîtier que la languette 23 du couvercle 15. En position de fixation correcte du couvercle 15 sur le bol 8, la languette 23 est engagée dans la fente 42 du bouton-poussoir 33, comme illustré aux figures 1 et 2.

Comme on le voit sur les figures 1 et 2, le ressort de rappel 31 du poussoir 29 est interposé entre une surface horizontale d'appui 44 formée dans le boîtier 1, à proximité de la paroi de fond 45 de celui-ci, et une petite aile horizontale 47 formée d'équerre sur la partie inférieure verticale 48 du poussoir 29.

Le dispositif de sécurité 25 comprend, en outre, des moyens permettant de verrouiller le bouton-poussoir 33 en position arrêt lorsque le couvercle 15 n'est pas correctement fixé sur le bol 8, c'est-à-dire lorsque la languette 23 du couvercle 15 n'est pas engagée dans la fente 42 du bouton-poussoir 33. Dans un exemple de réalisation, ces moyens de verrouillage sont constitués par un verrou, représenté schématiquement en 50 sur la figure 1, monté élastiquement sur la partie supérieure 40 du poussoir 29 et propre à bloquer de lui-même le bouton-poussoir 33 par rapport au bord supérieur 52 du renflement 35 du boîtier 1. Le bouton-poussoir 33 en position arrêt étant ainsi verrouillé lorsque le couvercle 15 n'est pas correctement fixé sur le bol 8, tout enfoncement du bouton-poussoir par l'utilisateur est impossible, de sorte que le poussoir 29 n'est pas actionné et reste donc dans une position haute de repos dans laquelle il n'actionne pas l'interrupteur 27.

Ces moyens de verrouillage du bouton-poussoir 33 constituent également des moyens permettant de déverrouiller ce bouton-poussoir 33 en position arrêt lorsque le couvercle 15 est correctement fixé sur le bol 8, c'est-à-dire lorsque la languette 23 du couvercle 15 est engagée dans la fente 42 du bouton-poussoir 33, comme illustré à la figure 1. En effet, lors de cet engagement de la languette 23 du couvercle 15 dans la fente 42 du bouton-poussoir, la languette 23 vient agir sur le verrou 50 pour le dégager suffisamment du bord supérieur 52 du renflement 35 du boîtier 1, de sorte que le bouton-poussoir 33 se trouve libéré. Le bouton-poussoir 33 en position arrêt étant ainsi déverrouillé, l'utilisateur peut enfoncer le bouton-poussoir, selon le sens de la flèche F sur la figure 1, qui passe alors en position marche et qui entraîne un coulissement du poussoir 29 vers une position basse de travail dans laquelle il actionne l'interrupteur 27 pour commander la fermeture du circuit d'alimentation électrique du moteur 3, comme illustré à la figure 2.

Le dispositif de sécurité 25 comprend également des moyens de retenue coopérant avec la languette 23 du couvercle 15 pour empêcher l'ouverture de ce dernier lorsque le poussoir 29 est déplacé vers sa position basse par manoeuvre du bouton-poussoir 33, le couvercle 15 étant correctement fixé sur le bol 8. Dans l'exemple de réalisation montré aux figures 1 et 2, ces moyens de retenue sont constitués par un bord supérieur 54, en forme de cran, de la fente 42 du bouton-poussoir 33 qui maintient en appui la languette 23 du couvercle 15 contre le bord supérieur 52 du renflement 35 du boîtier lorsque l'utilisateur enfonce le bouton-poussoir 33, comme illustré à la figure 2.

Selon l'invention, le dispositif de sécurité comprend, en outre, des moyens permettant de maintenir le poussoir 29 en position basse lorsque l'interrupteur 27 (figure 2) est bloqué dans son état de fermeture.

En regard des figures 1 et 2, l'interrupteur 27 comprend un corps 55 dans lequel est monté coulissant un poussoir vertical de contact 56 qui présente deux extrémités libres, respectivement supérieure 56a et inférieure 56b, faisant saillie du corps 55, et qui porte, à proximité de son extrémité inférieure 56b, une bague métallique 58 fixée par sertissage et faisant office de contact mobile destiné à venir coopérer avec deux contacts fixes 60,61 tournés légèrement l'un vers l'autre et montés extérieurement sur une surface inférieure du corps 55.

Dans l'exemple de réalisation représenté sur les figures 1 et 2, les moyens de maintien du poussoir 29 en position basse, lorsque l'interrupteur 27 est bloqué à l'état fermé (figure 2) par suite par exemple d'un collage de la bague métallique 58 sur les deux contacts fixes 60,61, sont constitués par une première patte de maintien 63 qui est montée fixe sur le poussoir 29 et qui est en appui permanent sur l'extrémité inférieure 56b du poussoir de contact 56 de l'interrupteur 27.

Comme le montrent les figures 1 et 2, le poussoir 29 est également en appui permanent sur l'extrémité supérieure 56a du poussoir de contact 56 de l'interrupteur 27 au moyen d'une seconde patte d'actionnement 65 montée également fixe sur le poussoir 29.

Ainsi, le poussoir coulissant de contact 56 de l'interrupteur 27 est maintenu en permanence par ses deux extrémités contre les deux pattes 63,65 du poussoir 29, de sorte qu'il suit toujours le mouvement de coulissement imprimé au poussoir 29.

De préférence, le poussoir 29 et les deux pattes, respectivement de maintien 63 et d'actionnement 65, sont moulés d'une seule pièce en matière plastique.

Comme le montrent les figures 1 et 2, les deux pattes 63,65 du poussoir 29 sont droites, s'étendent parallèlement l'une à l'autre, et sont montées chacune d'équerre sur ce poussoir 29, constituant ainsi une fourchette à deux dents entre lesquelles est monté en appui le poussoir vertical de contact 56 de l'interrupteur 27.

Ainsi, lorsque le couvercle 15 est correctement fixé sur le bol 8, c'est-à-dire lorsque la languette 23 du couvercle 15 est engagée dans la fente 42 du bouton-poussoir 33 (figure 1), l'utilisateur peut appuyer sur le bouton-poussoir 33 qui passe à sa position marche dans laquelle le bord supérieur 54 de la fente 42 du bouton-poussoir vient maintenir la languette 23 du couvercle 15 en appui contre le bord supérieur 52 du renflement 35 du boîtier (voir figure 2), empêchant ainsi l'ouverture du couvercle 15, et, simultanément, le poussoir 29 se déplace vers le bas à l'encontre du ressort de rappel 31 ; au cours de ce déplacement du poussoir 29, la patte 65 de celui-ci, en appui permanent sur l'extrémité supérieure 56a du poussoir de contact 56 de l'interrupteur 27, fait coulisser vers le bas ce poussoir de contact 56 dont la bague métallique 58 vient coopérer avec les deux contacts fixes 60,61 de manière à fermer l'interrupteur 27 de commande de l'alimentation électrique du moteur 3 (voir figure 2), tandis que la patte 63 du poussoir 29, en appui permanent sur l'extrémité inférieure 56b du poussoir de contact 56, se déplace vers le bas sur une même hauteur que le poussoir de contact 56.

Si maintenant l'interrupteur 27 vient à se bloquer dans son état de fermeture, figure 2, le poussoir 29 reste maintenu en position basse grâce à sa patte de maintien 63 coopérant avec l'extrémité inférieure 56b du poussoir de contact 56 ainsi bloqué, de sorte que le bouton-poussoir 33 solidaire du poussoir 29 reste également enfoncé en position marche dans laquelle il empêche l'ouverture du couvercle 15. L'utilisateur doit alors débrancher l'appareil pour arrêter le moteur 3.

On a donc réalisé suivant l'invention un appareil électroménager à commande manuelle équipé d'un dispositif de sécurité qui est particulièrement avantageux tant du point de vue de sa simplicité de réalisation que du point de vue de la sécurité optimale qu'il offre à l'utilisateur aussi bien lorsque le couvercle n'est pas correctement fixé sur le bol, que lorsque l'appareil, couvercle correctement fixé sur le bol, est en fonctionnement normal ou accidentel suite au blocage de l'interrupteur dans son état fermé.

On notera que la description ci-dessus a été faite en référence à un dispositif de sécurité pour un hachoir à couteau rotatif. Bien entendu, ce dispositif de sécurité s'applique à tout autre appareil électroménager de préparation culinaire à commande manuelle comportant un outil de travail rotatif considéré comme dangereux, tel que par exemple un robot de cuisine utilisant divers outils rotatifs tranchants.

## Revendications

1. Appareil électroménager pour la préparation d'aliments, comportant un boîtier (1) renfermant un groupe-moteur électrique (3) dont l'arbre de sortie (4) fait saillie du boîtier et est destiné à entraîner en rotation un outil de travail (13) logé dans un bol (8) sur lequel est fixé un couvercle amovible (15) comprenant une languette (23) fixée sur la périphérie du couvercle ; et un dispositif de sécurité (25) comprenant un interrupteur (27) agencé dans le circuit d'alimentation électrique du moteur, un poussoir (29) de commande de l'interrupteur monté coulissant verticalement à l'intérieur et à la périphérie du boîtier (1), associé à un ressort de rappel (31), et actionné par un organe de commande manuelle (33) lié fixement au poussoir (29) et monté mobile sur le boîtier (1) entre une position arrêt et une position marche, des moyens (50,52) permettant, d'une part, de verrouiller l'organe de commande manuelle (33) en position arrêt lorsque le couvercle (15) n'est pas correctement fixé sur le bol (8) de sorte que le poussoir (29) reste dans une position haute dans laquelle il n'actionne pas l'interrupteur (27), et d'autre part, de déverrouiller cet organe de commande manuelle (33) en position arrêt lorsque le couvercle (15) est correctement fixé sur le bol (8) de manière que, par manoeuvre de l'organe de commande (33) vers sa position marche, le poussoir (29) vienne occuper par coulissement une position basse dans laquelle il commande la fermeture de l'interrupteur (27) pour autoriser l'alimentation du moteur, ainsi que des moyens de retenue (52,54) coopérant avec la languette (23) du couvercle (15) pour empêcher l'ouverture de ce dernier lorsque le poussoir (29) est déplacé vers sa position basse,
**caractérisé en ce que** le dispositif de sécurité (25) comprend en outre des moyens (63) permettant de maintenir le poussoir (29) en position basse lorsque l'interrupteur (27) est bloqué dans son état de fermeture.

2. Appareil électroménager selon la revendication 1,
**caractérisé en ce que** l'interrupteur (27) comprend un corps (55) dans lequel est monté coulissant un poussoir vertical de contact (56) qui présente deux extrémités libres, respectivement supérieure (56a) et inférieure (56b), faisant saillie du corps (55), et qui porte, à proximité de son extrémité inférieure (56b), une bague métallique (58) faisant office de contact mobile destiné à venir coopérer avec deux contacts fixes (60,61) montés sur ledit corps (55), le poussoir (29) est en appui permanent sur l'extrémité supérieure (56a) du poussoir de contact (56), et les moyens de maintien du poussoir (29) en position basse sont constitués par une première patte (63) montée fixe sur le poussoir (29) et qui est en appui permanent sur l'extrémité inférieure (56b) du poussoir de contact (56).

3. Appareil électroménager selon la revendication 2,
**caractérisé en ce que** le poussoir (29) et la première patte (63) sont réalisés d'une seule pièce en matière plastique.

4. Appareil électroménager selon la revendication 2 ou 3,
**caractérisé en ce que** le poussoir (29) est espacé latéralement du corps (55) de l'interrupteur (27) et est en appui permanent sur l'extrémité supérieure (56a) du poussoir de contact (56) au moyen d'une seconde patte (65) montée fixe sur le poussoir (29).

5. Appareil électroménager selon la revendication 4,
**caractérisé en ce que** le poussoir (29) et la seconde patte (65) sont réalisés d'une seule pièce en matière plastique.

6. Appareil électroménager selon la revendication 4 ou 5,
**caractérisé en ce que** les première (63) et seconde (65) pattes sont droites, s'étendent parallèlement l'une à l'autre, et sont montées chacune d'équerre sur le poussoir (29).

## Patentansprüche

1. Elektrisches Haushaltsgerät zur Zubereitung von Nahrungsmitteln mit einem Gehäuse (1), das ein Elektroantriebsaggregat (3) umschließt, dessen Abtriebswelle (4) aus dem Gehäuse vorsteht und dazu dient, ein Arbeitswerkzeug (13) drehend anzutreiben, das in einem Becher (8) sitzt, auf dem ein abnehmbarer Deckel (15) befestigt ist, der eine am Umfang des Deckels befestigte Zunge (23) aufweist, und mit einer Sicherheitsvorrichtung (25), die einen im elektrischen Stromkreis des Motors liegenden Schalter (27) und einen Drücker (29) zur Betätigung des Schalters aufweist, der vertikal verschiebbar im Inneren und am Umfang des Gehäuses (1) angeordnet ist, mit einer Rückstellfeder (31) zusammenwirkt und durch ein Handsteuerungselement (33) betätigt wird, das mit dem Drücker (29) fest verbunden und am Gehäuse (1) zwischen einer Stoppstellung und einer Betriebsstellung beweglich montiert ist, wobei eine Vorrichtung (50, 52) es ermöglicht, einerseits das Handsteuerungselement (33) in der Stoppstellung zu verriegeln, wenn der Deckel (15) nicht richtig auf dem Becher (8) fixiert ist, so daß der Drücker (29) in einer oberen Stellung verbleibt, in der er den Schalter (27) nicht betätigt, und andererseits dieses Handsteuerungselement (33) in der Stoppstellung zu entriegeln, wenn der Deckel (15) richtig auf dem Becher (8) fixiert ist, so daß durch Betätigung des Steuerungselements (33) in seine Betriebsstellung der Drücker (29) durch Verschiebung eine untere Stellung einnimmt, in welcher er den Schalter (27) schließt, um den Motor mit Strom zu versorgen, sowie mit einer Rückhaltevorrichtung (52, 54), die mit der Zunge (23) des Deckels (15) zusammenwirkt, um dessen Öffnen zu verhindern, wenn der Drücker (29) in seine untere Stellung verschoben ist, **dadurch gekennzeichnet, daß** die Sicherheitsvorrichtung (25) außerdem eine Vorrichtung (63) aufweist, welche es ermöglicht, den Drücker (29) in der unteren Stellung zu halten, wenn der Schalter (27) in seiner Schließstellung blockiert ist.

2. Elektrisches Haushaltsgerät nach Anspruch 1, **dadurch gekennzeichnet, daß** der Schalter (27) einen Körper (55) aufweist, in dem ein vertikaler Kontaktstößel (56) montiert ist, der zwei freie Enden, nämlich ein oberes Ende (56a) und ein unteres Ende (56b) aufweist, die aus dem Körper (55) vorspringen, und der in der Nähe seines unteren Endes (56b) einen Metallring (58) trägt, der als beweglicher Kontakt dient und mit zwei festen Kontakten (60, 61) zusammenwirkt, die am Körper (55) montiert sind, wobei der Drücker (29) dauernd auf das obere Ende (56a) des Kontaktstößels (56) drückt und die Vorrichtung, welche den Drücker (29) in der unteren Stellung hält, aus einem ersten Finger (63) besteht, der am Drücker (29) befestigt ist und dauernd gegen das untere Ende (56b) des Kontaktstößels (56) drückt.

3. Elektrisches Haushaltsgerät nach Anspruch 2, **dadurch gekennzeichnet, daß** der Drücker (29) und der erste Finger (63) einstückig aus Kunststoff hergestellt sind.

4. Elektrisches Haushaltsgerät nach Anspruch 2 oder 3, **dadurch gekennzeichnet, daß** der Drücker (29) in einem seitlichen Abstand vom Körper (55) des Schalters (27) angeordnet ist und mittels eines am Drücker (29) befestigten zweiten Fingers (65) dauernd auf das obere Ende (56a) des Kontaktstößels (56) drückt.

5. Elektrisches Haushaltsgerät nach Anspruch 4, **dadurch gekennzeichnet, daß** der Drücker (29) und der zweite Finger (65) als ein einziges Stück aus Kunststoff hergestellt sind.

6. Elektrisches Haushaltsgerät nach Anspruch 4 oder 5, **dadurch gekennzeichnet, daß** der erste Finger (63) und zweite Finger (65) gerade sind, sich parallel zueinander erstrecken und jeder im rechten Winkel zum Drücker (29) montiert sind.

## Claims

1. Domestic electrical appliance for the preparation of food, having a housing (1) containing an electric motor unit (3) whose output shaft (4) projects from the housing and is intended to drive in rotation a working tool (13) housed in a bowl (8) to which there is fixed a removable cover (15) comprising a tongue (23) fixed to the periphery of the cover ; and a safety device (25) comprising a switch (27) arranged in the electric supply circuit to the motor, a pusher (29) controlling the switch mounted so as to slide vertically inside and at the periphery of the housing (1), associated with a return spring (31), and actuated by a manual control member (33) fixedly connected to the pusher (29) and mounted so as to move on the housing (1) between an off position and an on position, means (50, 52) for on the one hand locking the manual control member (33) in the off position when the cover (15) is not correctly fixed to the bowl (8) so that the pusher (29) remains in an up position in which it does not actuate the switch (27), and on the other hand unlocking this manual control member (33) in the off position when the cover (15) is correctly fixed to the bowl (8) so that, by manoeuvring the control member (33) to the on position, the pusher (29) comes to occupy, by sliding, a down position in which it controls the closure of the switch (27) to allow supply to the motor, as well as retaining means (52, 54) cooperating with the tongue (23) on the cover (15) in order to prevent the opening of the latter when the pusher (29) is moved towards its down position, **characterised in that** the safety device (25) also comprises means (63) for holding the pusher (29) in the down position when the switch (27) is locked in its closed state.

2. Domestic electrical appliance according to claim 1, **characterised in that** the switch (27) comprises a body (55) in which there is slidably mounted a vertical contact pusher (56) which has two free ends, respectively top (56a) and bottom (56b), projecting from the body (55), and which carries, close to its bottom end (56b), a metallic ring (58) serving as a movable contact intended to cooperate with two fixed contacts (60, 61) mounted on said body (55), the pusher (29) is in permanent abutment on the top end (56a) of the contact pusher (56), and the means of holding the pusher (29) in the low position consist of a first lug (63) mounted fixedly on the pusher (29) and which is in permanent abutment on the bottom end (56b) of the contact pusher (56).

3. Domestic electrical appliance according to claim 2, **characterised in that** the pusher (29) and the first lug (63) are produced in a single piece from plastics material.

4. Domestic electrical appliance according to claim 2 or 3, **characterised in that** the pusher (29) is spaced apart laterally from the body (55) of the switch (27) and is in permanent abutment on the top end (56a) of the contact pusher (56) by means of a second lug (65) mounted fixedly on the pusher (29).

5. Domestic electrical appliance according to claim 4, **characterised in that** the pusher (29) and the second lug (65) are produced in a single piece from plastics material.

6. Domestic electrical appliance according to claim 4 or 5, **characterised in that** the first (63) and second (65) lugs are straight, extend parallel to each other and are each mounted square on the pusher (29).
